# EUROPÄISCHE PATENTANMELDUNG

(11) **EP 2 284 327 A2**
(43) Veröffentlichungstag der Anmeldung: **16.02.2011**
(21) Anmeldenummer: 10008124.9
(22) Anmeldetag: 04.08.2010
(51) Int. Cl.: E04C 2/24

(54) **Wandelement**

(30) Priorität: 12.08.2009 AT 5042009 U
(71) Anmelder: Mair, Helmuth, 6200 Jenbach (AT)
(72) Erfinder: Mair, Helmuth, 6200 Jenbach (AT)
(74) Vertreter: Sonn & Partner Patentanwälte

(57) **Zusammenfassung**

Fertigteil-Wandelement (1) mit zumindest einer Platte (2) und zumindest einem mit der Platte (2) verbundenen Halteelement (3) für eine in einem plastisch verformbaren Zustand aufgebrachte Auskleidungsschicht (4), wobei die Auskleidungsschicht (4) aus einem Lehm enthaltenden Gemisch besteht, das spanförmige Elemente aus einem Gras bzw. Holz enthält, wobei das Gemisch einen Anteil an Gras bzw. Holz in pulverförmigem Zustand enthält.

## Beschreibung

Die vorliegende Erfindung betrifft ein Fertigteil-Wandelement mit zumindest einer Platte und zumindest einem mit der Platte verbundenen Halteelement für eine in einem plastisch verformbaren Zustand aufgebrachte Auskleidungsschicht, wobei die Auskleidungsschicht aus einem Lehm enthaltenden Gemisch besteht.

Aus der DE 198 31 295 A1 ist ein Fertighauselement bekannt, dessen Armierung aus statisch tragenden Holzständern bzw. Fachwerken besteht. Die Holzelemente werden mit einer Leichtbeton-Vergussmasse umschlossen. Als Bestandteile der Vergussmasse sind u.a. Holz, Späne, Stroh, Schilfrohr und Häcksel beschrieben.

In der DE 203 11 744 U1 sind dämmende Außenwandbauelemente bzw. Verbundplansteine gezeigt, bei denen in eine Grundmasse aus Porenbeton nachwachsende Rohstoffe, wie z.B. Miscanthus, oder Styroporschnitzel als Bindemittel eingemischt werden.

In der DE 20 2006 000 935 U1 ist ein Bauelement beschrieben, das eine selbsttragende, formstabile Holzbautafel aufweist, die mit einer Anschlussprofilierung in der Art von Putzleisten verbunden ist. Die Anschlussprofilierung trägt eine Putzschicht.

Aus der EP 1 826 330 A2 ist ein Fertigteil-Wandelement bekannt, bei welchem eine vollflächige Wandfläche aus Holz mit Halteelementen in der Art von Holzleisten verbunden ist. Die Holzleisten weisen jeweils eine Hinterschneidung auf, so dass eine haftende und formschlüssige Verbindung zwischen den Holzleisten und einer in der Vorfertigung im plastisch verformbaren Zustand aufgetragenen Auskleidungsschicht ermöglicht wird. Als Auskleidungsschicht wird insbesondere eine Lehmschicht verwendet. Bei einer Ausbildung als Außenwand ist zudem ein Dämmmaterial vorgesehen, welches zwischen tragende, jeweils mit der vollflächigen Wandfläche verbundene Holzpfosten eingebracht wird. Als Dämmmaterial werden verschiedene Materialien wie Dämmwolle oder eine Kombination aus Lehm und unbehandelten Hobelspänen eingesetzt.

Solche Fertigteil-Wandelemente haben sich in der Praxis grundsätzlich sehr gut bewährt. Wandelemente mit einer Auskleidungsschicht aus einem Lehm enthaltenden Gemisch weisen eine Reihe von Vorteilen auf. Insbesondere kann das Auftreten von Allergien, Atemwegserkrankungen durch Pilzbefall oder Bakterien, etc. erheblich reduziert werden, da sogar im Winter bei sehr trockenen Verhältnissen eine vergleichsweise hohe Raumfeuchte erzielbar ist. Zudem wirkt das Lehm-Gemisch wärmespeichernd, so dass das Wandelement auch zur Aufnahme von Wandheizungen sehr gut geeignet ist.

Ziel der vorliegenden Erfindung ist es demzufolge, ein Fertigteil-Wandelement der eingangs angeführten Art zu schaffen, mit welchem die mit einer Auskleidungsschicht aus einem Lehm enthaltenden Gemisch erzielbaren Vorteile noch besser ausgenützt werden können, welches weiters insbesondere für eine Nachbearbeitung geeignet ist und welches eine stabile, dauerhaft zuverlässige Verbindung zwischen der Auskleidungsschicht und den übrigen Teilen des Wandelements ermöglicht.

Dies wird bei dem Fertigteil-Wandelement der eingangs angeführten Art dadurch erzielt, dass das Gemisch einen Anteil an Gras bzw. Holz in pulverförmigem Zustand enthält.

Indem die Auskleidungsschicht spanförmiges Gras bzw. Holz aufweist, wird eine besonders stabile, dauerhaft zuverlässige Verbindung der Auskleidungsschicht mit dem Halteelement bzw. der Platte erzielt. Beim Aushärten der in einem Vorfertigungsschritt in plastisch verformbarem Zustand aufgebrachten Auskleidungsschicht verkeilen bzw. verhaken sich die spanförmigen Elemente untereinander bzw. an dem Halteelement, so dass das ausgehärtete Wandelement eine sehr hohe Stabilität aufweist. Zudem kann mit dem Gemisch aus Lehm und spanförmigen Elementen ein angenehmes Raumklima mit sehr guter Feuchtigkeitsregulierung erzielt werden. Die Auskleidungsschicht weist außerdem ein vergleichsweise geringes Gewicht auf, was naturgemäß den Transport bzw. die Montage des Wandelements vor Ort erleichtert. Tests haben gezeigt, dass es hinsichtlich einer erhöhten Stabilität des Wandelements günstig ist, dass das Gemisch einen Anteil an Gras bzw. Holz in pulverförmigem Zustand enthält. Hierbei bilden sich aus den spanförmigen und den pulverförmigen Elementen Verbindungen in der Art von Fasern, wodurch die Stabilität des Wandelements weiter erhöht wird.

Ein zweckmäßiges, sehr gut nachbearbeitbares Fertigteil-Wandelement wird zur Verfügung gestellt, wenn spanförmige Elemente aus einem Gras vorgesehen sind, wobei sich spanförmige Elemente aus Miscanthus als besonders vorteilhaft erwiesen haben. Die Auskleidungsschicht mit dem Gemisch aus Gras, insbesondere Miscanthus, und Lehm ermöglicht eine gegenüber den bekannten Auskleidungsschichten erleichterte Nachbearbeitung, indem das ausgehärtete Gemisch leichter zersägbar ist und Bohrungen mit hoher Genauigkeit vorgesehen werden können. Zudem weist Miscanthus im Vergleich zu Holz eine schlechte Wasseraufnahmefähigkeit auf, welches insbesondere hinsichtlich eines angenehmen Raumklimas und eines geringen Gewichts vorteilhaft ist.

Eine besonders stabile Verbindung der Auskleidungsschicht mit den Halteelementen kann erzielt werden, wenn die spanförmigen Elemente eine Länge von 2 mm bis 7 mm, vorzugsweise von 3 mm bis 6 mm, aufweisen.

Hinsichtlich einer sehr guten Feuchtigkeits- bzw. Wärmeregulierung hat es sich als vorteilhaft herausgestellt, wenn die Auskleidungsschicht einen Lehm-Gehalt von 40 bis 70, insbesondere von 50 bis 60, Gewichtsprozenten aufweist.

Zur Erzielung eines guten Raumklimas hat es sich als günstig herausgestellt, wenn die Auskleidungsschicht einen Wasser-Gehalt von 10 bis 46, insbesondere von 23 bis 33, Gewichtsprozenten aufweist.

In der Praxis hat es sich als günstig herausgestellt, wenn die Auskleidungsschicht einen Gehalt an spanförmigen Elementen von 5 bis 20, insbesondere von 8 bis 15, Gewichtsprozenten aufweist.

Vorzugsweise beträgt der Anteil des pulverförmigen Materials der Auskleidungsschicht zwischen 1 und 8, insbesondere zwischen 3 und 6, Gewichtsprozenten. Dabei ist es günstig, wenn der Anteil an spanförmigen Elementen zwischen dem 2- und 4-fachen des Anteils an pulverförmigem Material beträgt. Das pulverförmige Material wird in der Vorfertigung durch feines Zermahlen von gestückeltem Gras bzw. Holz hergestellt.

Untersuchungen haben gezeigt, dass ein besonders stabiles, leichtes und gut nachbearbeitbares Fertigteil-Wandelement zur Verfügung gestellt wird, wenn die Auskleidungsschicht folgende Zusammensetzung in Gewichtsprozenten aufweist:
pulverförmiger Miscanthus: 2 - 6 %
spanförmiger Miscanthus: 8 - 14 %
Wasser: 20 - 36 %
und einen Rest bestehend im Wesentlichen aus Lehm und Verunreinigungen.

Vorteilhafterweise ist auf der Auskleidungsschicht eine Feinputz-Schicht aufgebracht, welche vorzugsweise erst vor Ort aufgebracht wird, d.h. nicht Teil des Fertigteil-Wandelements ist.

Bei bekannten Fertigteil-Wandelementen ist das Problem aufgetreten, dass sich mit den längsseitigen Seitenkanten der Platte im Wesentlichen bündig abschließende Halteelemente mit der Zeit geringfügig gelockert haben. Diesbezüglich hat es sich als günstig herausgestellt, wenn das Halteelement im montierten Zustand an der Platte bezüglich längsseitiger Seitenkanten der Platte nach innen, vorzugsweise in einem Abstand vom Rand zwischen 20 und 35 mm, versetzt angeordnet ist. Auf diese Weise ist an den seitlichen Randbereichen der Platte lediglich eine Lehmschicht bestehend aus dem erfindungsgemäßen Gemisch vorgesehen, wodurch die Stabilität des Wandelements vorteilhafterweise weiter erhöht wird.

Zur dauerhaften Befestigung der Auskleidungsschicht am Halteelement bzw. der Platte hat es sich als günstig herausgestellt, wenn als Halteelement Holzleisten vorgesehen sind, deren Querschnittsflächen einen konisch verjüngenden Verlauf aufweisen. Zusätzlich zur Haftverbindung im Zuge der werkseitigen Aushärtung der Auskleidungsschicht wird demnach eine besonders haltbare formschlüssige Verbindung hergestellt, indem die konisch geschnittenen Holzleisten von der Auskleidungsschicht hintergriffen werden, so dass eine dauerhaft zuverlässige Verbindung zwischen der Platte bzw. den Holzleisten und der Auskleidungsschicht erzielt wird.

Hinsichtlich einer erhöhten Stabilität der Verbindung zwischen dem als Holzleisten ausgebildeten Halteelement und der Auskleidungsschicht ist es günstig, wenn zumindest zwei Schichten mit jeweils beabstandet angeordneten Holzleisten vorgesehen sind, wobei die Holzleisten der einen Schicht im Wesentlichen senkrecht zu den Holzleisten der anderen Schicht angeordnet sind. Vorzugsweise sind die direkt an der Platte befestigten Holzleisten im Wesentlichen parallel zu den längsseitigen Seitenkanten des Wandelements angeordnet.

Hinsichtlich eines möglichst hohen Grads an Vorfertigung ist es von Vorteil, wenn in der Auskleidungsschicht Installationsleitungen aufgenommen sind. Die Installationsleitungen werden vorzugsweise zwischen den parallel zu den längsseitigen Seitenkanten der Platte verlaufenden Holzleisten auf der Platte angeordnet, bevor die plastisch verformbare Auskleidungsschicht aufgebracht wird.

Der Grad an werkseitiger Vorfertigung kann weiter erhöht werden, wenn in der Auskleidungsschicht eine Heizvorrichtung aufgenommen ist.

Hinsichtlich einer guten Schalldämmung ist es günstig, wenn als Platte eine Holzwerkstoffplatte, inbesondere eine Holzfaserplatte, vorgesehen ist. Dabei hat es sich als vorteilhaft herausgestellt, wenn die Wandstärke bzw. Dicke der Platte zwischen 0,2 cm und 2 cm, vorzugsweise zwischen 0,4 cm und 1,5 cm, beträgt.

Vorzugsweise weist das Fertigteil-Wandelement eine Länge zwischen 0,3 m und 3,5 m, vorzugsweise zwischen 0,5 m und 3 m, besonders bevorzugt 2,8m, und eine Breite zwischen 50 cm und 70 cm, vorzugsweise 60 cm und 65 cm, besonders bevorzugt 62,5 cm, auf. Aufgrund seiner hohen Stabilität kann das Fertigteil-Wandelement demnach bis zu einer Raumhöhe von ca. 3,5 m als selbsttragendes Wandelement, d.h. ohne unterstützende Konstruktionen, eingesetzt werden. Zudem kann das Fertigteil-Wandelement auf einfache Weise von zwei Personen gehoben und manipuliert werden, so dass bei der Aufstellung der Wandelemente keine Kräne oder dergl. erforderlich sind.

Die vorstehend beschriebenen günstigen Effekte der Auskleidungsschicht können in besonders vorteilhafter Weise ausgenützt werden, wenn die Wandstärke bzw. Dicke der Auskleidungsschicht zwischen 3cm und 6cm, vorzugsweise zwischen 4,2 cm und 5,2 cm, beträgt.

Die Erfindung wird nachstehend anhand von in der Zeichnung dargestellten bevorzugten Ausführungsbeispielen, auf die sie jedoch nicht beschränkt sein soll, noch näher erläutert. Im Einzelnen zeigen in der Zeichnung:
Fig. 1 einen Querschnitt durch ein Fertigteil-Wandelement mit einer Platte und an der Platte befestigten Holzleisten als Halteelement für eine Auskleidungsschicht;
Fig. 2 eine Schnittansicht des Fertigteil-Wandelements gemäß der Linie II-II in Fig. 1;
Fig. 3 eine Schnittansicht des Fertigteil-Wandelements gemäß der Linie III-III in Fig. 1; und
Fig. 4 bis 6 den Fig. 1 bis 3 entsprechende Darstellungen eines Fertigteil-Wandelements gemäß einer zweiten Ausführungsform der Erfindung, bei welcher die vertikalen Holzleisten Hinterschneidungen aufweisen.

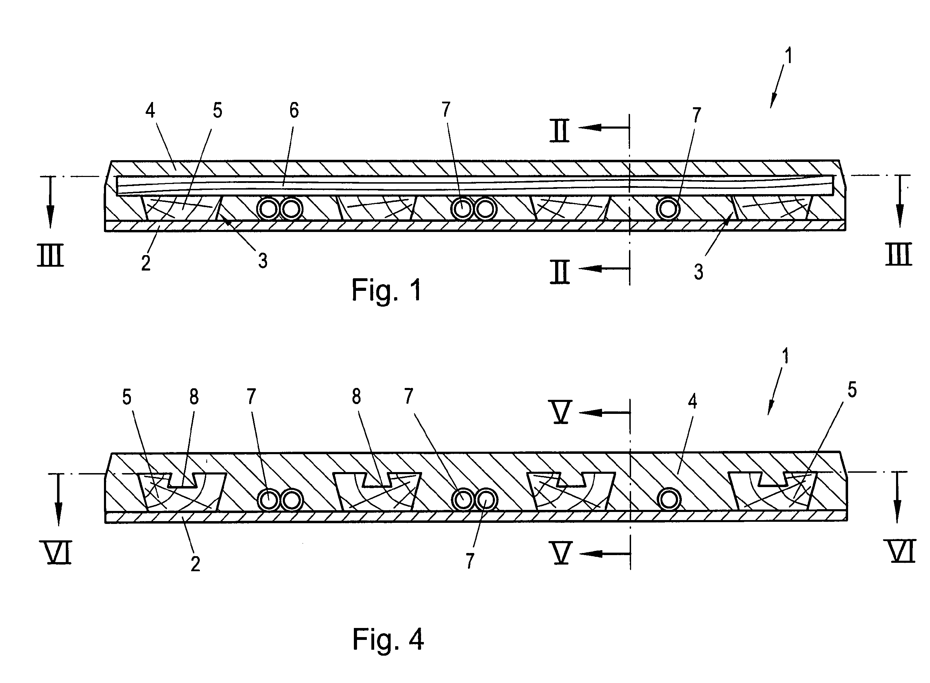

In Fig. 1 ist ein Querschnitt durch ein Fertigteil-Wandelement 1 dargestellt, bei welchem eine Platte 2 vorgesehen ist, welche hinsichtlich einer guten Schalldämmung als Holzfaserplatte oder Holzwerkstoffplatte mit einer Wandstärke von 0,8 cm ausgebildet ist. Mit der Platte 2 ist ein Halteelement 3 für eine im plastisch verformbaren Zustand aufgebrachte Auskleidungsschicht 4 mit einer Wandstärke bzw. Dicke von 4,7 cm verbunden. Zudem kann eine (in den Fig. nicht dargestellte) Holzverkleidung aus verschiedensten Holzarten vorgesehen sein.

Die Auskleidungsschicht 4 besteht aus einem Lehm enthaltenden Gemisch, welches mit spanförmigen Elementen aus einem Gras bzw. aus Holz versetzt ist. Beim Aushärten der Auskleidungsschicht 4 im Zuge der Vorfertigung verkeilen bzw. verhaken sich diese spanförmigen Elemente, so dass ein stabiles Wandelement 1 mit einer besonders haltbaren Verbindung zwischen der Auskleidungsschicht 4 und der Platte 2 bzw. dem Halteelement 3 zur Verfügung gestellt wird. Zum Auftragen der Auskleidungsschicht 4 wird eine Walzmaschine verwendet, mit der das Gemisch auf die Platte 2 bzw. das Halteelement 3 gewalzt wird. Dies hat sich gegenüber einem Eingießen oder Aufspritzen des Gemischs als vorteilhaft herausgestellt.

Als spanförmige Elemente können einerseits Holzspäne bzw. Sägespäne vorgesehen sein; insbesondere hat sich allerdings ein Lehm-Gemisch mit spanförmigen Elementen aus einem Gras als vorteilhaft erwiesen, wobei vorzugsweise Miscanthus verwendet wird. Das Gemisch aus Gras, insbesondere Miscanthus, und Lehm ermöglicht eine unkomplizierte Nachbearbeitung, wenn eine aus diesem Gemisch bestehende Auskleidungsschicht 4 im ausgehärteten Zustand zersägt, mit Bohrungen versehen oder auf andere Weise weiterverarbeitet werden soll. In der Vorfertigung werden die spanförmigen Elemente, insbesondere der Miscanthus, in kleine Stücke mit einer Länge von 3 mm bis 6 mm gehackt und einer Wasser-Lehm-Mischung beigefügt.

Der Lehm-Gehalt des Gemischs für die Auskleidungsschicht 4 beträgt dabei 56,5 Gewichtsprozente; zudem wird ein Anteil an Wasser von 28 Gewichtsprozenten vorgesehen. Hiedurch wird ein Wandelement 1 bereitgestellt, welches eine sehr gute Feuchtigkeits- bzw. Wärmeregulierung bzw. allgemein ein angenehmes Raumklima ermöglicht.

Der Gehalt an spanförmigen Elementen in der Auskleidungsschicht 4 beträgt 11,5 Gewichtsprozente, wobei das Gemisch zusätzlich einen Anteil an Gras bzw. Holz in pulverförmigem Zustand enthält. Das pulverförmige Material wird durch feines Zermahlen von Holz- bzw. Gras-Stücken hergestellt. Der Anteil des pulverförmigen Materials an der Auskleidungsschicht 4 beträgt 4 Gewichtsprozente, so dass der Anteil an spanförmigen Elementen ungefähr das 3-fache des Anteils an pulverförmigem Material beträgt.

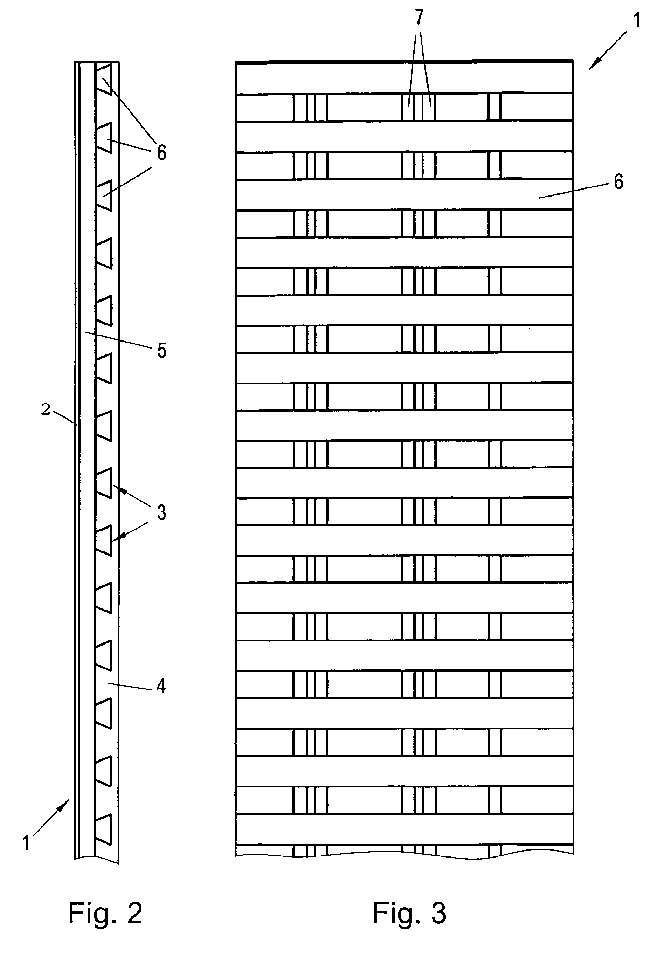

Als Halteelement 3 für die Auskleidungsschicht 4 ist eine erste bzw. eine zweite Schicht mit jeweils einer Mehrzahl von beabstandet voneinander angeordneten Holzleisten 5 bzw. 6 vorgesehen, wie insbesondere aus Fig. 3 ersichtlich. Die direkt an der Platte 2 befestigten Holzleisten 5 sind im Wesentlichen parallel zu den längsseitigen Seitenkanten der Platte 2 angeordnet und dienen im montierten Zustand des Wandelements 1 als vertikale Lattung. Die Holzleisten 6 der zweiten Schicht, welche als horizontale Lattung vorgesehen sind, sind im Wesentlichen senkrecht zu den Holzleisten 5 der ersten Schicht angeordnet, wie aus Fig. 3 ersichtlich. Die Befestigung der Holzleisten 5 an der Platte bzw. der Holzleisten 6 an den Holzleisten 5 erfolgt mit in den Figuren nicht dargestellten Befestigungsmitteln wie Klammern, Schrauben, Nägeln oder dergl..

Die Querschnittsflächen der Holzleisten 5, 6 weisen einen konisch verjüngenden Verlauf auf, was für die im montierten Zustand vertikal an der Platte 2 angeordneten Holzleisten 5 bzw. für die horizontal angeordneten Holzleisten 6 am besten aus Fig. 1 bzw. Fig. 2 ersichtlich ist. Hiedurch wird zusätzlich zur reibschlüssigen Verbindung zwischen dem Halteelement 3 und der Auskleidungsschicht 4 während des Aushärtens der Auskleidungsschicht 4 außerdem eine formschlüssige Verbindung erzielt, indem die Hölzleisten 5,6 von der im plastisch verformbaren Zustand aufgebrachten Auskleidungsschicht 4 hintergriffen werden.

Wie aus Fig. 1 ersichtlich, sind die als Halteelement 3 vorgesehenen Holzleisten 5, 6 im montierten Zustand an der Platte 2 bezüglich längsseitiger Seitenkanten der Platte 2 ca. 35 bis 40 mm nach innen versetzt angeordnet. Demnach schließen die äußeren, an den seitlichen Endbereichen der Platte 2 befestigten vertikalen Holzleisten 5 nicht bündig mit den längsseitigen Seitenkanten der Platte 2 ab bzw. erstrecken sich die horizontalen Holzleisten 6 nicht über die gesamte Breite der Platte 2, so dass an den seitlichen Randbereichen vergleichsweise viel Material der Auskleidungsschicht 4 vorgesehen ist. Hiedurch wird die Stabilität des Wandelements gegenüber einer bündigen Ausrichtung an den Seitenkanten der Platte 2 erheblich erhöht.

Zwischen den vertikalen Holzleisten 6 sind jeweils Installationsleitungen bzw. Elektroleerverrohrungen 7 aufgenommen, welche vor dem Aufbringen der Auskleidungsschicht 4 auf die Platte 2 aufgelegt bzw. zwischen die Holzleisten 5, 6 eingeschoben werden, wie aus Fig. 1 und 2 ersichtlich. Zudem kann im Wandelement 1 auch eine in den Figuren nicht dargestellte Heizvorrichtung bzw. Wandheizung, ebenfalls bereits in der Vorfertigung, vorgesehen werden. An die Auskleidungsschicht 4 kann schließlich noch eine Feinputzschicht anschließen, welche erst auf der Baustelle aufgebracht wird und demnach nicht Teil des Vorfertigungs-Prozesses ist.

Das Wandelement 1 kann mit einer Länge zwischen 0,3 m und 3,5 m bzw. einer Breite vorzugsweise zwischen 50 cm und 70 cm als selbsttragendes Fertigteil-Element konstruiert werden, welches ohne zusätzliche Unterstützungs-Konstruktionen vor Ort aufgestellt bzw. montiert werden kann.

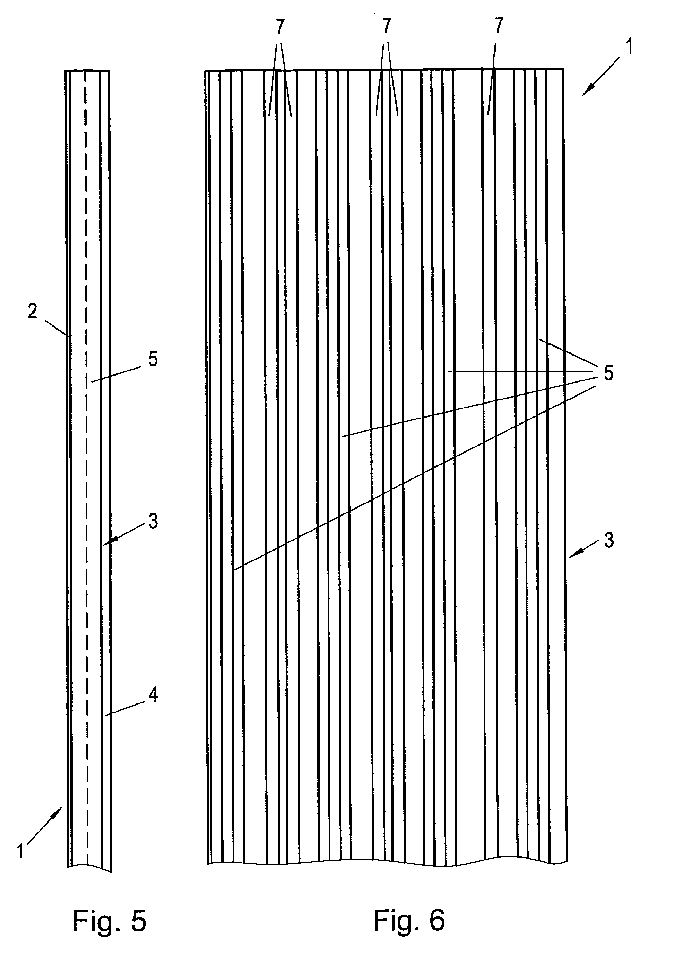

In den Fig. 4 bis 6 ist eine alternative Ausführung des Wandelements 1 gezeigt, bei welcher keine horizontale Lattung vorgesehen ist. Als Halteelemente 3 sind demnach lediglich die im montierten Zustand vertikal an der Holzweichfaser- bzw. Holzwerkstoff-Platte 2 angeordneten Holzleisten 5 vorgesehen. Um eine ausreichend stabile, dauerhaft zuverlässige Verbindung mit der Auskleidungsschicht 4 auch ohne horizontale Holzleisten zu gewährleisten, weisen die Holzleisten 5 ein konisches Querschnittsprofil sowie Hinterschneidungen 8 an der von der Platte 2 abgewandten Seite auf, welche von der Auskleidungsschicht 4 hintergriffen werden, um auf diese Weise eine formschlüssige Verbindung auszubilden. Die Auskleidungsschicht enthält 4 % pulverförmigen Miscanthus, 11,5 % spanförmigen Miscanthus, 28 % Wasser und 56,5 % Lehm und einen Rest bestehend im Wesentlichen aus Lehm und Verunreinigungen.

Die Abmessungen des Wandelements 1 bzw. seiner Komponenten entsprechen dabei gerade dem im Zusammenhang mit den Fig. 1 bis 3 erläuterten Wandelement 1.

## Patentansprüche

1. Fertigteil-Wandelement (1) mit zumindest einer Platte (2) und zumindest einem mit der Platte (2) verbundenen Halteelement (3) für eine in einem plastisch verformbaren Zustand aufgebrachte Auskleidungsschicht (4), wobei die Auskleidungsschicht (4) aus einem Lehm enthaltenden Gemisch besteht, das spanförmige Elemente aus einem Gras bzw. Holz enthält, **dadurch gekennzeichnet, dass** das Gemisch einen Anteil an Gras bzw. Holz in pulverförmigem Zustand enthält.

2. Fertigteil-Wandelement (1) nach Anspruch 1, **dadurch gekennzeichnet, dass** die spanförmigen Elemente eine Länge von 2 mm bis 7 mm, vorzugsweise von 3 mm bis 6 mm, aufweisen.

3. Fertigteil-Wandelement (1) nach Anspruch 1 oder 2, **dadurch gekennzeichnet, dass** die Auskleidungsschicht (4) einen Lehm-Gehalt von 40 bis 70, insbesondere von 50 bis 60, Gewichtsprozenten aufweist.

4. Fertigteil-Wandelement (1) nach einem der Ansprüche 1 bis 3, **dadurch gekennzeichnet, dass** die Auskleidungsschicht (4) einen Wasser-Gehalt von 10 bis 46, insbesondere von 23 bis 33, Gewichtsprozenten aufweist.

5. Fertigteil-Wandelement (1) nach einem der Ansprüche 1 bis 4, **dadurch gekennzeichnet, dass** die Auskleidungsschicht (4) einen Gehalt an spanförmigen Elementen von 5 bis 20, insbesondere von 8 bis 15, Gewichtsprozenten aufweist.

6. Fertigteil-Wandelement (1) nach Anspruch 1, **dadurch gekennzeichnet, dass** der Anteil des pulverförmigen Materials der Auskleidungsschicht (4) zwischen 1 und 8, insbesondere zwischen 3 und 6, Gewichtsprozenten liegt.

7. Fertigteil-Wandelement (1) nach Anspruch 1 oder 6, **dadurch gekennzeichnet, dass** der Anteil an spanförmigen Elementen zwischen dem 2- und 4-fachen des Anteils an pulverförmigem Material beträgt.

8. Fertigteil-Wandelement (1) nach einem der Ansprüche 1, 6 oder 7, **dadurch gekennzeichnet, dass** die Auskleidungsschicht (4) folgende Zusammensetzung in Gewichtsprozenten aufweist:
pulverförmiger Miscanthus: 2 - 6 %
spanförmiger Miscanthus: 8 - 14 %
Wasser: 20 - 36 %
und einen Rest bestehend im Wesentlichen aus Lehm und Verunreinigungen.

9. Fertigteil-Wandelement (1) nach einem der Ansprüche 1 bis 8, **dadurch gekennzeichnet, dass** das Halteelement (3) im montierten Zustand an der Platte (2) bezüglich längsseitiger Seitenkanten der Platte (2) nach innen versetzt angeordnet ist.

10. Fertigteil-Wandelement (1) nach einem der Ansprüche 1 bis 9, **dadurch gekennzeichnet, dass** als Halteelement (3) Holzleisten (5, 6) vorgesehen sind, deren Querschnittsflächen einen konisch verjüngenden Verlauf aufweisen.

11. Fertigteil-Wandelement (1) nach Anspruch 10, **dadurch gekennzeichnet, dass** zumindest zwei Schichten mit jeweils beabstandet angeordneten Holzleisten (5, 6) vorgesehen sind, wobei die Holzleisten (6) der einen Schicht im Wesentlichen senkrecht zu den Holzleisten (5) der anderen Schicht angeordnet sind.

12. Fertigteil-Wandelement (1) nach einem der Ansprüche 1 bis 11, **dadurch gekennzeichnet, dass** in der Auskleidungsschicht (4) Installationsleitungen (7) oder eine Heizvorrichtung aufgenommen sind.

13. Fertigteil-Wandelement (1) nach einem der Ansprüche 1 bis 12, **dadurch gekennzeichnet, dass** als Platte (2) eine Holzwerkstoffplatte, inbesondere eine Holzfaserplatte, vorgesehen istwobei die Wandstärke bzw. Dicke der Platte (2) zwischen 0,2 cm und 2 cm, vorzugsweise zwischen 0,4 cm und 1,5 cm, beträgt.

14. Fertigteil-Wandelement (1) nach einem der Ansprüche 1 bis 13, **dadurch gekennzeichnet, dass** das Fertigteil-Wandelement (1) eine Länge zwischen 0,3 m und 3,5 m, vorzugsweise zwischen 0,5 m und 3 m, besonders bevorzugt 2,8 m, und eine Breite zwischen 50 cm und 70 cm, vorzugsweise zwischen 60 cm und 65 cm, besonders bevorzugt 62,5 cm, beträgt.

15. Fertigteil-Wandelement (1) nach einem der Ansprüche 1 bis 14, **dadurch gekennzeichnet, dass** die Wandstärke bzw. Dicke der Auskleidungsschicht (4) zwischen 3 cm und 6 cm, vorzugsweise zwischen 4,2 cm und 5,2 cm, beträgt.
